# EUROPÄISCHE PATENTSCHRIFT

(11) **EP 0 545 351 B1**
(45) Veröffentlichungstag und Bekanntmachung des Hinweises auf die Patenterteilung: **02.05.1997**
(21) Anmeldenummer: 92120472.3
(22) Anmeldetag: 01.12.1992
(51) Int. Cl.: A01D 34/86

(54) **Trägergerät für ein Arbeitswerkzeug**
Carrier apparatus for a work tool
Appareil porteur pour un outil de travail

(30) Priorität: 02.12.1991 DE 4139661
(43) Veröffentlichungstag der Anmeldung: 09.06.1993
(73) Patentinhaber: Haupenthal & Reeb GmbH, 66663 Merzig-Silwingen (DE)
(72) Erfinder: Danzeisen, Thomas, W-7835 Teningen 3 (DE); Wisser, Werner, W-7834 Herbolzheim 5 (DE); Haupenthal, Benno, W-6646 Losheim-Hausbach (DE); Reeb, Albert, W-6640 Merzig 4 Silwingen (DE)
(74) Vertreter: Rackette, Karl, Dipl.-Phys. Dr.-Ing

(56) Entgegenhaltungen:
- DE-A- 1 935 672
- DE-A- 2 414 769
- DE-A- 2 922 495
- DE-A- 3 208 870
- DE-A- 3 218 525
- FR-A- 2 638 597
- US-A- 1 869 123
- US-A- 3 113 411

## Beschreibung

Die Erfindung betrifft ein Trägergerät, insbesondere für einen Kraftwagen, zum Tragen eines Arbeitswerkzeuges, insbesondere eines Mähwerks oder eines Schneidwerks, mit einem Grundrahmen, an dem eine im wesentlichen parallel zur Ebene des Grundrahmens verschiebliche Auslegereinrichtung befestigt ist, an der eine das Arbeitswerkzeug tragende Umlenkhalterung zur Einstellung der Arbeitswerkzeugsneigung befestigt ist, wobei an dem Grundrahmen an einem seiner Enden eine im wesentlichen vertikale erste Achse angeordnet ist, an der eine im wesentlichen horizontale und im wesentlichen zur anderen Seite hin ausgerichtete Sicherheitsscherstange befestigt ist, wobei die Auslegereinrichtung als Teleskopauszugseinrichtung ausgebildet ist, an deren äußerem Ende die Umlenkhalterung an einer weiteren Achse angelenkt ist, wobei die Auslegereinrichtung mit ihrem Außenrahmen auf der Sicherheitsscherstange um eine im wesentlichen horizontale zweite Achse verschwenkbar angeordnet ist, die in Ruhestellung der Sicherheitsscherstange im wesentlichen quer zur Ebene des Grundrahmens ausgerichtet ist und mit der die Auslegereinrichtung mit der an ihr befestigten Umlenkhalterung in ihrer Neigung aus der Horizontalen anhebbar ist und wobei die zweite Achse im wesentlichen parallel zur weiteren, dritten Achse ausgerichtet ist.

Eine solche Vorrichtung ist aus der DE-A-29 22 495 bekannt. Sie zeigt ein seitlich angeordnetes Mähwerk, das über eine Teleskopauszugseinrichtung ausfahrbar ist. Diese Einrichtung ist dafür vorgesehen, um seitlich weiter von einem Zugfahrzeug gelegenes Gelände zu bearbeiten. Es können aber mit dieser Vorrichtung nicht alle Böschungen und Geländegegebenheiten bearbeitet werden.

Es sind darüber hinaus eine Vielzahl von anderen Trägergeräten bekannt, so zum Beispiel ein mit einem Seitenmäher verbundener Vorbauträger, der unter der Bezeichnung SMT 15 von der Firma Dücker KG aus W-4424 Stadtlohn vertrieben wird. Ein solcher Seitenmäher wird an einem kleinen Lastkraftwagen vorne angebaut. Mit ihm können dann z.B. Böschungen und Bankette gemäht werden.

Dieses Vorbaugerät weist den Nachteil auf, daß es sehr weit, ungefähr 80 cm, vor dem Lastkraftwagen angebaut ist, so daß es zumeist nicht ohne ein zusätzliches Stützrad vor der Vorderachse des Lastkraftwagens benutzt werden kann. Ein solches Stützrad kompliziert den mechanischen Aufbau und verschlechtert die Fahreigenschaften des Kraftwagens.

Ein weiterer Nachteil der bekannten Vorrichtung liegt darin, daß beim unbeabsichtigten Anfahren von Hindernissen das Arbeitswerkzeug nur um einen geringen Winkel zurückschwenken kann, so daß bei einem weiteren Vorfahren des Kraftwagens entweder das Arbeitswerkzeug Schaden nimmt oder das angefahrene Hindernis, z.B. ein Straßenpfosten, zerstört wird. Beim Mähen um Hindernisse herum muß der Kraftwagen selbst in einem Bogen auf der Straße ausweichen, was eine Gefährdung des Verkehrs bedeuten kann.

Der genannte bekannte Vorbauträger für Seitenmäher verfügt über eine seitliche Verschiebeeinrichtung in Gestalt eines Parallelogrammes, mit der es möglich ist, das Seitenmähwerk um 65 Zentimeter über den Seitenrand des kleinen Lastkraftwagens hinaus zu schieben. Damit ist jedoch eine Vielzahl von breiten Banketten in der Tiefe nicht ausreichend bearbeitbar, sofern diese über ungefähr 1,60 Meter breit sind. Hier müßten dann aufwendige Ausleger-Mähwerke eingesetzt werden, wie sie aus dem Prospekt des Fahrzeugwerks Heinz Wössner GmbH u. Co.KG aus D-7605 Bad Peterstal bekannt sind. Ein anderes Auslegermähwerk ist aus der DE-PS 32 18 525 bekannt, welches wie schon oben beschrieben, notwendigerweise über ein Stützrad verfügt, um den seitlichen Ausleger zu halten und zu stützen.

Es ist weiterhin mit den bekannten Vorbauträgern nicht möglich, bei Gräben die Böschung zu mähen, die sich auf der von der Straße weiter entfernt liegenden Seite des Grabens befindet. Für solche Arbeiten wird bis jetzt ebenfalls ein Frontausleger verwendet, der über mehrere Gelenkarme verfügt, so daß man mit einem an dem äußeren Gelenkarm befestigten Arbeitswerkzeug mehrere Meter seitwärts arbeiten kann. Dieses Gerät weist jedoch den Nachteil auf, daß ein Mähen in unmittelbarer Nähe des Kraftwagens nicht möglich ist. Soll aber ein Bankett oder eine Böschung in unmittelbarer Nähe der Fahrspur gemäht werden, muß der Kraftwagen weiter ausholend in der Mitte der Straße fahren, was bei befahrenen öffentlichen Straßen nicht wünschenswert ist.

Desweiteren ist es bei der Verwendung eines mehrarmigen Frontauslegers beim Auftreten von kleineren Bäumen am Straßenrand nicht möglich, mit einem Mähwerk unter dem Baum oder Busch zu mähen, da der Auslegearm des Frontauslegers von oben an den Baum oder das Buschwerk stößt und z.B. durch Mitnähme von Versorgungsleitungen unter Umständen beschädigt werden könnte.

Aus der DE-AS 24 14 769 ist ein an einen Zugschlepper anhängbares Mähwerk bekannt, welches an seinem Träger über eine vertikale Achse verfügt, die in einem kleinen Abstand zu einer Seite des Schleppers angeordnet ist. Die Anordnung eines Trägers hinter einem Zugfahrzeug ist bei Mäheinrichtungen z.B. für öffentliche Straßen nicht erwünscht.

Alle genannten Einrichtungen weisen zudem den Nachteil auf, daß mit dem Anbau des z.B. Mähwerks an ein Trägerfahrzeug jeweils nur eine vorgegebene Straßen- oder Wegseite in Bezug auf das Trägerfahrzeug bearbeitet werden kann. Es kann aber in vielen Fällen wünschenswert sein, daß diese bearbeitbare Seite nicht konstruktionsgemäß vorgegeben ist.

Die US-A-3,113,411 schließlich lehrt ein vollständiges Mähfahrzeug, bei dem zentral auf der Ladefläche eine Einrichtung vorgesehen ist, mit der eine Neigung der Teleskopvorrichtung des Mähwerks einstellbar ist, so daß Böschungen bearbeitbar sind. Dieses Mähfahrzeug weist den Nachteil auf, daß es ausschließlich für seinen Einsatzzweck konzipiert ist, so daß bereine vorhandene Trägerfahrzeuge nicht eingesetzt werden können, was zu höheren Kosten für den Fuhrpark führt.

Ausgehend von diesem Stand der Technik liegt der Erfindung die Aufgabe zugrunde, ein Trägergerät für einen Kraftwagen anzugeben, mit dem es in einfacher Weise möglich ist, auf beiden Seiten eines Kraftwagens unter tiefstehenden Bäumen auch in schwierigen Lagen in größerem Abstand von einem Kraftwagen oder Zugfahrzeug zu mähen und dabei Beschädigungen eines Arbeitswerkzeuges sicher zu vermeiden.

Diese Aufgabe wird erfindungsgemäß für eine Vorrichtung nach dem Oberbegriff des Anspruchs 1 dadurch gelöst, daß die Auslegereinrichtung mit ihrem Außenrahmen um die zweite Achse in ihrer Neigung auch absenkbar ist, daß die zweite Achse im wesentlichen in der Mitte des Grundrahmens angeordnet ist, daß an dem Grundrahmen an dem anderen Ende des Trägergerätes eine im wesentlichen vertikale weitere erste Achse angeordnet ist, an der die Sicherheitsscherstange anlenkbar ist, daß der ausfahrbare Abschnitt und der Antrieb der Teleskopauszugseinrichtung aus dem mit der zweiten Achse verbundenen Außenrahmen herausziehbar und an dem anderen Ende des Außenrahmens einsteckbar ist und daß die Umlenkhalterung und deren Antrieb auf dem ausfahrbaren Abschnitt der Teleskopauszugseinrichtung im wesentlichen symmetrisch bezüglich der Längsachse der durch die Teleskopauszugseinrichtung angeordnet sind.

Dadurch, daß die zweite Drehachse vorhanden ist und über eine mit dieser verbundenen Einrichtung die Teleskopstange ausfahrbar ist, an der wiederum die verschwenkbare dritte Umlenkachse angelenkt ist, ist es möglich, in einem Graben die gegenüberliegende entferntere Grabenböschung unter einem tiefstehenden Baum zu bearbeiten. Gleichzeitig weist diese Vorrichtung den Vorteil auf, daß beim Anfahren gegen ein Hindernis der Verschwenkschutz der Vorrichtung von bis zu 90 Grad aktiviert wird, so daß es nahezu unmöglich wird, den Vorbauträger durch Anfahren gegen ein Hindernis zu beschädigen.

Bei dem Trägergerät ist zudem die zweite Achse im wesentlichen in der Mitte des Grundrahmens angeordnet und an dem Grundrahmen an dem anderen Ende des Trägergerätes eine im wesentlichen vertikale weitere erste Achse angeordnet, an der die Sicherheitsscherstange anlenkbar ist. Dabei ist der ausfahrbare Abschnitt und der Antrieb der Teleskopauszugseinrichtung aus dem mit der zweiten Achse verbundenen Außenrahmen herausziehbar und an dem anderen Ende des Außenrahmens einsteckbar. Gleichzeitig ist die Umlenkhalterung und deren Antrieb im wesentlichen symmetrisch zu dem und auf dem ausfahrbaren Abschnitt der Teleskopauszugseinrichtung ausgerichtet, so daß so die gesamte Vorrichtung mit wenigen Handgriffen von der einen Seite auf die andere Seite umsteckbar ist, so daß dasselbe Trägergerät mit einem entsprechenden Werkzeug auf beiden Straßenseiten oder auf beiden Seiten eines landwirtschaftlichen Fahrzeugs einsetzbar ist.

Weitere vorteilhafte Ausgestaltungen sind in den Unteransprüchen beschrieben.

Nachfolgend wird ein Ausführungsbeispiel der Erfindung anhand der beigefügten Zeichnungen beispielhaft erläutert, wobei die Figuren 1-4 lediglich dazu dienen, den Aufbau der erfindungsgemäßen Vorrichtung zu erklären. Es zeigen:
- Fig. 1: einen Lastkraftwagen mit einem Trägergerät als Vorbauträger von vorne,
- Fig. 2: die Ansicht nach Fig. 1 mit einem nach oben bzw. nach unten verschwenkten Vorbauträger,
- Fig. 3: eine Draufsicht auf den Kraftwagen mit dem Vorbauträger gemäß Fig. 1,
- Fig. 4: die Vorrichtung nach Fig. 3 bei einer Vorbeifahrt an einem Hindernis,
- Fig. 5: eine Draufsicht auf einen Lastkraftwagen mit einem beidseitig einsetzbaren Trägergerät gemäß dem Ausführungsbeispiel der Erfindung, wobei das Trägergerät zur Verdeutlichung in doppelter Ausführung für beide Seiten des Lastkraftwagens bei der Vorbeifahrt an einem Hindernis dargestellt ist,
- Fig. 6: eine Draufsicht auf das in Fahrtrichtung links angeordnete Trägergerät nach Fig. 5,
- Fig. 7: eine Vorderansicht mit einem jeweils nach oben bzw. nach unten verschwenkten rechts bzw. links angeordneten Vorbauträger,
- Fig. 8: eine Schnittansicht entlang der Linie VIII-VIII in Fig. 6, und
- Fig. 9: eine Seitenansicht aus der Richtung IX in Fig. 6.

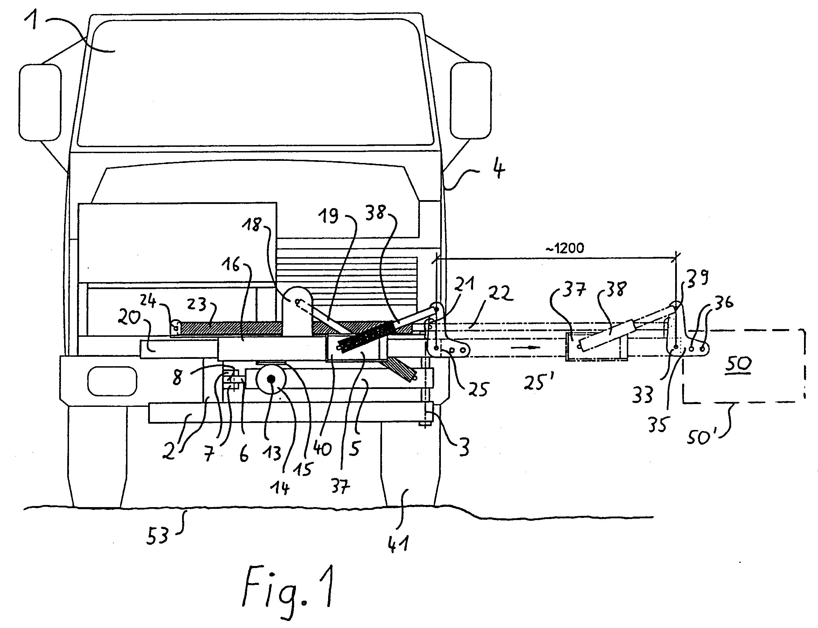

Die Fig. 1 zeigt einen Kraftwagen 1, an dem ein Vorbauträger angeordnet ist. Bei dem Kraftwagen 1 handelt es sich üblicherweise um einen kleinen, häufig geländegängigen Lastkraftwagen, der zumeist über eine vordere Zapfwelle verfügt, die zum Antrieb des hydraulischen Antriebs der Stellglieder des Vorbauträgers verwendet wird.

Der Vorbauträger verfügt über einen Grundrahmen 2, der an dem Kraftwagen 1 starr und verwindungssteif befestigt ist. Der Grundrahmen 2 trägt eine im wesentlichen vertikal angeordnete erste Drehachse 3. Diese Drehachse 3 ist in einem kleinen Abstand 81 von einer Seite 4 des Kraftwagens 1 angeordnet. Bei der in den Zeichnungen dargestellten Ausführungsform handelt es sich bei der Seite 4 um die in Fahrtrichtung linke Seite, die auch der Seite des Sitzes des Fahrzeugführers entspricht.

Der kleine Abstand 81 zwischen der ersten Achse 3 und der Seite 4 des Kraftwagens 1 beträgt zwischen wenigen Zentimetern und ca. 20 cm. Die Wahl der Größe dieses Abstandes 81 wird in der weiteren Beschreibung noch erläutert.

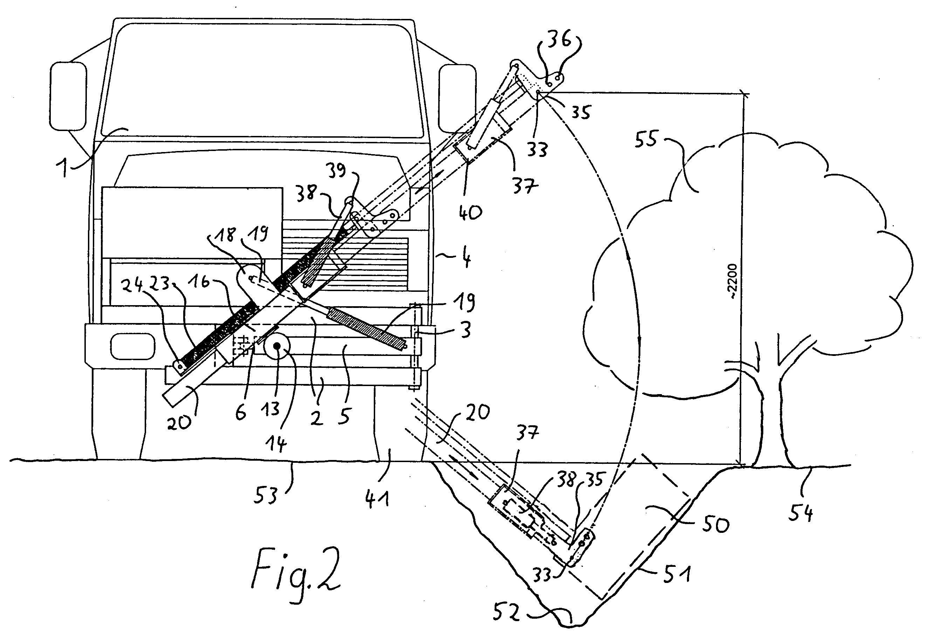

Die vertikale Drehachse 3, vorzugsweise mit einer Messingbuchse versehen, ist vorteilhafterweise in zwei in Fig. 2 sichtbaren Armen des Grundrahmens 2 gelagert. Zwischen diesen ist an der Drehachse 3 ein beweglicher Rahmen angeordnet, der in der Fig. 1 und im Folgenden mit Sicherheitsscherstange 5 bezeichnet wird. Die im wesentlichen horizontal angeordnete Scherstange 5 ist beim dargestellten Ausführungsbeispiel einseitig an der Drehachse 3 angelenkt und erstreckt sich in Ruhestellung von dieser im wesentlichen parallel zum Grundrahmen 2 zur Fahrzeugmitte hin. Sie ist vorteilhafterweise etwas länger als die halbe Fahrzeugbreite und endet vorzugsweise in einem Abscherstift 6, der zwischen zwei Sicherungsplatten 7 mit einem rückwärtigen Anschlag 8 am Rahmen 2 einführbar ist.

Auf der Scherstange 5 ist eine horizontal ausgerichtete zweite Achse 13 angeordnet. Diese zweite Achse 13 ist in einer zylindrischen Hülse 14 auf der Scherstange 5 befestigt. Sie ist in Ruhestellung im wesentlichen in Fahrtrichtung des Kraftwagens 1 ausgerichtet. An der Hülse 14 ist ein Außenrahmen 16 an einer aufgeschweißten Platte 15 über z.B. vier Schrauben befestigt.

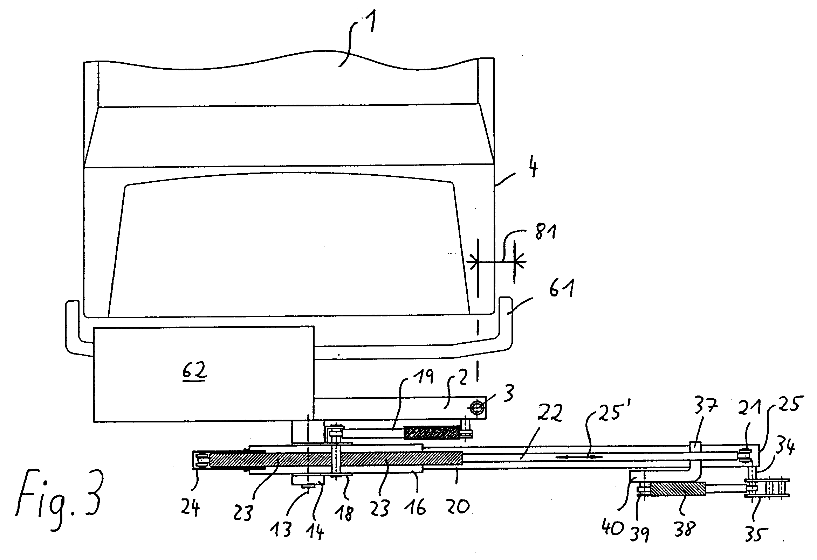

Der in einer Ebene mit der Scherstange 5 angeordnete Außenrahmen 16 besteht aus einem quaderförmigen Hohlrohr, auf welchem ein Ansatz 18 befestigt ist. An dem Ansatz 18 ist ein Ende eines hydraulischen Stellzylinders 19, wie in der Draufsicht der Fig. 3 erkennbar, zwischen dem Rahmen 2 und dem Außenrahmen 16 angeordnet. Das andere Ende des Stellzylinders 19 ist an der Scherstange 5 in der Nähe der ersten Achse 3 in Fahrtrichtung angelenkt. Mit Hilfe des Stellgliedes 19 ist der Außenrahmen 16 um die horizontale zweite Achse 13 verschwenkbar.

In dem Außenrahmen 16 ist ein Innenrohr 20 angeordnet, welches eine Länge von ungefähr zwei Drittel bis fast die ganze Fahrzeugbreite aufweist. An dem Innenrohr 20 ist an seinem der Fahrzeugseite 4 benachbarten Ende auf seiner Oberseite ein Halterungsansatz 21 angeordnet, an dem ein Plunger oder eine Kolbenstange 22 angelenkt ist. Die Kolbenstange 22 ist über einen Schiebezylinder 23 betätigbar. Dieser ist mit einem rückwärts über den Außenrahmen 16 hinausstehenden und an diesem befestigten Halteblech 24 befestigt. Die Länge und die Position des Haltebleches 24 ist durch die Länge der in den Schiebezylinder 23 einschiebbaren Kolbenstange 22 vorgegeben. Dessen Lage legt auch den maximalen seitlichen Abstand des dem Halterungsansatz 21 benachbarten Endes 25 des Innenrohres 20 von der Fahrzeugseite 4 fest.

Bei einem Ausfahren des Innenrohres 20 über die Fahrzeugseite 4 hinaus wird das Innenrohr 20 auf der gegenüberliegenden Fahrzeugseite in den Außenrahmen 16 eingezogen, während sich auf der anderen Seite des Außenrahmens 16 das Innenrohr 20 entsprechend dem Pfeil 25' vorschiebt. Bei einer Länge des Innenrohres 20 von ungefähr drei Viertel der Kraftwagenbreite eines üblichen kleinen Lastkraftwagens verbleiben bei einem in der Fig. 1 strichliniert dargestellten Ausfahren des Innenrohres 20 von 1,20 m über die Fahrzeugseite 4 hinaus vorzugsweise noch ungefähr 40 cm des Innenrohres 20 im Außenrahmen 16. Damit kann an dem Innenrohr 16 ein beliebiges auch schwereres Arbeitswerkzeug befestigt werden, ohne eine Verwindung des Vorbauträgers befürchten zu müssen.

An dem Ende 25 des Innenrohres 20, welches in Ruhestellung vorteilhafterweise über die erste vertikale Achse 3 hinausragt, aber nicht über die Fahrzeugseite 4 oder gegebenenfalls über die Stoßstange des Kraftwagens 1 hinaussteht, ist eine horizontal ausgerichtete dritte Achse 33 vorgesehen. Diese ist in einer in Fahrtrichtung auf das Innenrohr 20 angeschweißten Buchse 34 gelagert, die in Fig. 3 besser erkennbar ist. An dieser horizontalen dritten Achse 33 ist eine Umlenkhalterung 35 angelenkt. Die Umlenkhalterung 35 verfügt vorteilhafterweise über eine L-Form, wobei der Eckpunkt des L's den Drehpunkt bezüglich der dritten Achse 33 bildet. An der Umlenkhalterung 35 sind zwei Buchsen 36 nebeneinander vorgesehen, an denen ein Arbeitswerkzeug 50 befestigbar ist. Ein solches in den Fig. schematisch als Kasten dargestelltes Arbeitswerkzeug 50 könnte ein Mähwerk oder ein Schneidwerk sein, es kann sich dabei auch um eine Fegevorrichtung handeln. Diesen ist allen gemeinsam, daß die Schnitt- oder Mähebene 50' des Arbeitswerkzeugs 50 parallel zur Verbindung der beiden Buchsen 36 verläuft, wobei üblicherweise die Höhe des Mähwerkes geringer als der in Fig. 1 dargestellte Abstand von der Umlenkhalterung 35 zum Straßenboden 53 ist.

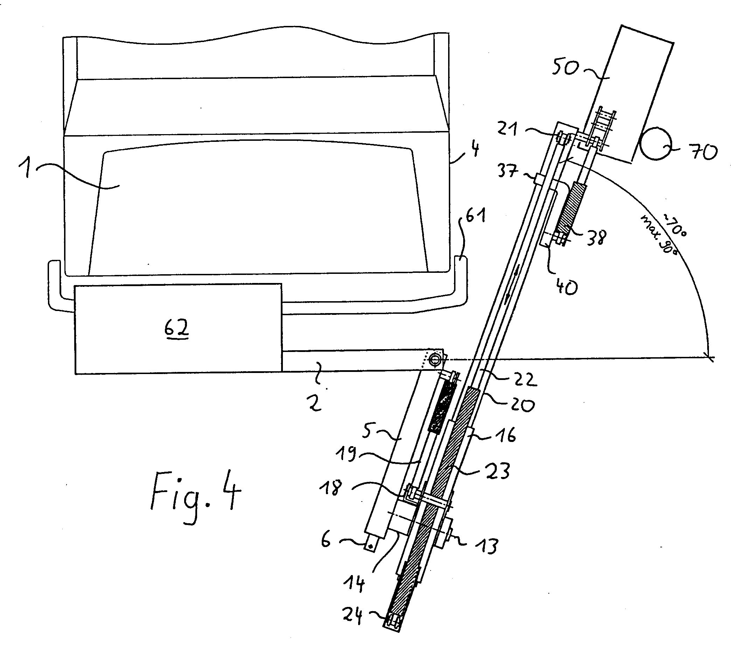

An dem Innenrohr 20 ist eine in der Fig. 4 besser zu erkennende Schulter 37 angeordnet, die vor dem Innenrohr 20 verläuft und deren freies Ende 40 in Richtung des Außenrahmens 16 angeordnet ist. Dabei besteht zwischen dem Innenrohr 20 und der Schulter 37 ein Zwischenraum, der es gestattet, den Außenrahmen 16 bis an die Verbindungsstelle Innenrohr 20 / Schulter 37 vorzuschieben, so daß das freie Ende 40 der Schulter 37 im Bereich des Außenrahmens 16 in Fahrtrichtung vor diesem angeordnet ist. An dem freien Ende 40 ist ein Stellzylinder 38 angelenkt, dessen anderes Ende an dem gegenüber den Buchsen 36 liegenden Endabschnitt der L-förmigen Umlenkhalterung in einer Buchse 39 angelenkt ist.

In der Fig. 1 ist der Stellzylinder 38 in einer mittleren Stellung dargestellt. Er kann verkürzt werden, womit die Umlenkhalterung 35 um die im wesentlichen horizontal verlaufende dritte Achse 33 verschwenkt wird. In der Endstellung sind die Buchsen 36 dabei in vertikaler Richtung übereinander angeordnet, so daß ein an der Umlenkhalterung 35 angeschlossenes Mähwerk 50 eine Oberfläche mit einer nach unten ausgerichteten Neigung über die Horizontale bis hin zur Vertikalen, d.h. im Extremfall parallel zur Fahrzeugseite 4, bearbeiten kann. Für ein nach unten geneigtes Arbeitswerkzeug 50 wird dabei der Stellzylinder 38 über die in Fig. 1 dargestellte Lage verlängert.

In der Fig. 1 ist in durchgezogenen Linien die Ruheposition des Vorbauträgers dargestellt. Dies bedeutet, daß das Innenrohr 20 in dem Außenrahmen 16 eingeschoben ist, wobei die dritte Achse 33 zwischen der ersten vertikalen Achse 3 und der Fahrzeugseite 4 angeordnet ist. Der Stellzylinder 38 ist in eine solche Position ausgefahren, daß das Arbeitswerkzeug 50 in einer horizontalen Position direkt neben dem Kraftwagen 1 angeordnet ist. Dabei ist erkennbar, daß bei einem verkürzten Stellzylinder 38 und dementsprechend umgeklappter Umlenkhalterung 35 der die Buchsen 36 tragende Abschnitt der L-förmigen Umlenkhalterung 35 nicht über die Fahrzeugseite 4 hinausragt. Üblicherweise kann das Arbeitswerkzeug 50 aus dieser, in den Fig. nicht dargestellten Lage, vor das Führerhaus des Kraftwagens umgeklappt werden. Damit befindet sich das Arbeitswerkzeug 50 vollständig vor dem Führerhaus, hier oberhalb des Rahmens 2, so daß die üblichen Straßenverkehrsvorschriften hinsichtlich der Breite von Fahrzeugen und eventuell überstehender Elemente eingehalten werden.

Die dritte Achse 33 wird vorzugsweise nicht in einer weiter Richtung Fahrzeugmitte liegenden Anordnung verwendet, da in der in Fig. 1 dargestellten Position - nach einer Umlenkung des Außenrahmens 16 um die Achse 13 nach unten - so nun direkt neben dem Reifen 41 des Kraftwagens 1 gemäht, geschnitten oder gefegt werden kann.

Die strichlinierte Darstellung in der Fig. 1 stellt den Vorbauträger in seiner maximalen seitlichen Ausfahrposition dar, die ungefähr der Hälfte der Breite des Kraftwagens entspricht, wobei bei einem entsprechenden an der Umlenkhalterung 35 angeordneten Mäh- oder Schneidwerk bis über zwei Meter neben dem Kraftwagen 1 gearbeitet werden kann.

Der Außenrahmen 16 verfügt z. B. über eine Länge von einem Meter und ist in einem solchen Abstand von der Seite 4 angeordnet, daß der die Buchse 39 tragende Arm der L-förmigen Umlenkhalterung 35 in die Horizontale verschwenkbar ist, ohne bis an die Schulter 37 zu reichen.

Die Fig. 2 zeigt die Ansicht nach Fig. 1 mit einem nach oben bzw. nach unten verschwenkten Vorbauträger. Gleiche Merkmale sind in allen Fig. mit gleichen Bezugszeichen versehen.

Die Fig. 2 erläutert insbesondere die Wirkung der horizontalen zweiten Drehachse 13, an der der Außenrahmen 16 befestigt ist. Diese ist in einer die Umlenkhalterung 35 anhebenden Weise betätigt, d.h. der Stellzylinder 19 befindet sich in einer weit ausgefahrenen Position, so daß der Außenrahmen 16 mit dem Innenrohr 20 und den daran befestigten Teilen in einem Winkel von knapp 45 Grad zur Horizontalen steht. Damit kann mit dem Arbeitswerkzeug in Höhe des Führerhauses direkt neben demselben gearbeitet werden. Die Höhe der Achse 13 beträgt im dargestellten Ausführungsbeispiel ungefähr 60 cm, so daß bei einem vollständig eingezogenen Innenrohr 20, dieses den Boden 53, auf dem das Kraftfahrzeug steht, nicht berührt.

Es ist ein weiterer Vorteil dieser Vorrichtung in der Fig. 2 zu erkennen. Wenn die horizontale zweite Achse 13 im wesentlichen mittig vor dem Kraftwagen 1 angeordnet wird, z. B. in einem Abstand von 40 - 50 % der Breite des Kraftwagens 1 von der Seite 4 aus gesehen, ergibt sich bei einer Verlängerung der Teleskopvorrichtung mit ausgefahrenem Innenrohr 20 die in der Fig. 2 im unteren Abschnitt strichliniert dargestellte Lage, bei der das Innenrohr 20 in einem Winkel von ungefähr 35 Grad über den Reifen 41 des Kraftwagens 1 hinausragt und das Arbeitswerkzeug 50 auf der gegenüberliegenden Seite 51 eines Grabens 52 aufsetzbar ist. Der Graben 42 ist skizzenhaft neben der Fahrbahn 53 aufgezeichnet, auf der der Lastkraftwagen 1 fährt. Das Schneidwerkzeug 50 ist insbesondere auch dann einsetzbar, wenn sich auf dem neben dem Graben 52 gelegenen Bereich 54 ein Baum oder Gebüsch 55 befindet.

Die Fig. 3 zeigt eine Draufsicht auf den Kraftwagen 1 mit dem angebauten Vorbauträger nach Fig. 1. Es ist der Grundrahmen 2 und die Achse 3 erkennbar, die in einem möglichst kleinen Abstand vor der Stoßstange 61 des Kraftwagens 1 in Fahrtrichtung angeordnet sind. Der auch vor dem Kühler im Bereich der Stoßstange 61 angeordnete Kasten 62 beinhaltet eine Hydraulikanlage. Die Hydraulikanlage wird vorteilhafterweise über die vordere Zapfwelle des Kraftwagens 1 angetrieben. Dabei ist insbesondere ein kurzes Übersetzungsgetriebe von der vorderen Zapfwelle einzusetzen, so daß der Grundrahmen 2 möglichst dicht vor dem Kraftwagen 1 befestigt werden kann. Unter dem dargestellten Grundrahmen 2 befindet sich der in der Fig. 3 nicht sichtbare bewegliche Rahmen 5, an den die Buchse 14 der horizontalen zweiten Drehachse 13 befestigt ist. Diese steht nur wenig über den Grundrahmen 2 in Fahrtrichtung hervor. An dieser Buchse 14 ist der Ansatz 18 befestigt, an dem ein Ende des die Neigung der Teleskopeinrichtung 26 einstellende Stellzylinders 19 angelenkt ist.

An dem Außenrahmen 16 ist das über den Außenrahmen hinausragende Halteteil 24 angeordnet, an dem der Stellzylinder 23 befestigt ist, dessen Kolbenstange 22 an dem hier in ausgefahrener Stellung dargestellten Innenrohr 20 befestigt ist.

Das zur Fahrzeugseite 4 hinweisende Ende des Außenrahmen 16 ist dabei so weit in Richtung der Fahrzeugseite 4 angeordnet, daß bei einem eingezogenen Innenrohr 20 die an dem Innenrohr befestigte Schulter 37 gerade vor dem Außenrahmen 16 endet. Hierfür ist die Schulter 37 in einer L-Form ausgeführt, die mit einer das Innenrohr 20 aufnehmenden Aussparung versehen und an diesem angeschweißt ist. Der von dem Innenrohr 20 wegweisende Arm 40 des L's trägt an seinem Ende den Anlenkpunkt 63 des Stellzylinders 38, dessen anderes Ende mit der Umlenkhalterung 35 verbunden ist. Die L-förmige Schulter 37 ist bei in dem Außenrahmen 16 eingezogenem Innenrohr 20 in Fahrtrichtung vor dem Außenrahmen 16 angeordnet. Somit ist die Länge des Außenrahmens 16 mehr in Richtung der Fahrzeugseite 4 verlängerbar, so daß bei einem ausgezogenen Innenrohr 20 ein größerer Anteil des Innenrohres 20 in dem Außenrohr 16 verbleibt, bzw. daß vorgesehen sein kann, das Innenrohr 20 noch weiter auszuziehen.

Es ist weiter in der Fig. 3 zu erkennen, daß sich bei einem Hydraulikantrieb 62 vorgegebener Breite der weiteste Vorbau vor dem Kraftwagen 1 aus der Breite der beiden Stellzylinder 19 und 38 sowie der Breite des Außenrahmens 16 unter Berücksichtigung der erforderlichen Spiel- und Freiräume ergibt. Somit ist ein Vorbauträger mit einem Vorbau in der Größenordnung von unter 60 cm möglich, womit auch schwerere Arbeitswerkzeuge 50 an der Umlenkhalterung 35 einsetzbar sind, ohne daß ein Stützrad benötigt wird.

Die Fig. 4 schließlich zeigt einen Vorbauträger beim Anfahren eines Hindernisses 70. Der Kraftwagen 1 ist gegen ein Hindernis 70 gestoßen und noch etwas weiter gerollt. Es kann sich bei dem Hindernis z.B. um einen Baumstamm, einen Streckenpfosten oder einen Zaunpfahl handeln, der im Bereich des Arbeitswerkzeuges 50 aus dem Boden ragt. Das Hindernis 70 stößt gegen das Arbeitswerkzeug 50. Das dadurch erzeugte Drehmoment läßt die Sicherheitsscherstange 5 mit ihrem Abscherstift 6 aus den Platten 7 in einer Drehung um die Drehachse 3 herausscheren. Damit wird die Umlenkhalterung 35 mit dem an ihr befestigten Arbeitswerkzeug 50 nach hinten verschwenkt. In der Zeichnung ist hier ein Winkel von ungefähr 70 Grad dargestellt. Aufgrund der Nähe der ersten vertikalen Drehachse 3 zu der Fahrzeugseite 4 wäre selbst ein Verschwenkwinkel von 90 Grad möglich, da der durch die Länge der Buchse 14 vorgegebene Vorbau des Innenrohres 20 vor dem Rahmen 2 und 5 gerade dem Abstand 81 der Drehachse 3 von der Fahrzeugaußenseite 4, gegebenenfalls unter Beachtung einer Stoßstange 61, ergibt.

Dadurch ist es möglich, an dem Hindernis vorbeizufahren, ohne daß der Kraftwagen 1 seine Spur ändern muß. Durch ein in der Zeichnung nicht dargestelltes Mittel zum Erzeugen einer Federwirkung wird nach Vorbeifahrt am Hindernis 70 die Abscherstange 5 in die Ausgangslage zurückgebracht. Vorteilhafterweise sind zudem an dem Arbeitswerkzeug 50 und/oder an der Schulter 37 Schutzbleche angeordnet, um auch den Bereich des Innenrohres 20 bei einem Anfahren eines Hindernisses in diesem Bereich zu schützen.

Sämtliche Stellzylinder sind z. B. durch die Hydraulikanlage 62 betätigbar, die über die vordere Zapfwelle angetrieben wird. In den Fig. sind die hierfür notwendigen Hydraulikschläuche und Steuerleitungen nicht dargestellt, da sie in bekannter Weise verlegt sind und nur die Klarheit der Zeichnung vermindert hätten.

Der beschriebene Vorbauträger kann auch als eigenständiges Trägergerät an eine landwirtschaftliche Zugmaschine angehängt werden, wobei die Hydraulikanlage 62 über eine hintere Zapfwelle angetrieben werden kann. Es kann aber auch eine eigene Hydraulikpumpe und ein getrennter Hydraulikkreislauf vorgesehen sein.

Weiterhin ist es möglich, eine Hydraulikpumpe mit Nullhubregelung als Regelpumpe einzusetzen, wobei dann der Benutzer der Einrichtung vorzugsweise über ein Steuerpult zur proportionalen Steuerung der einzelnen oben erläuterten Stellfunktionen der einzelnen Hubzylinder verfügt.

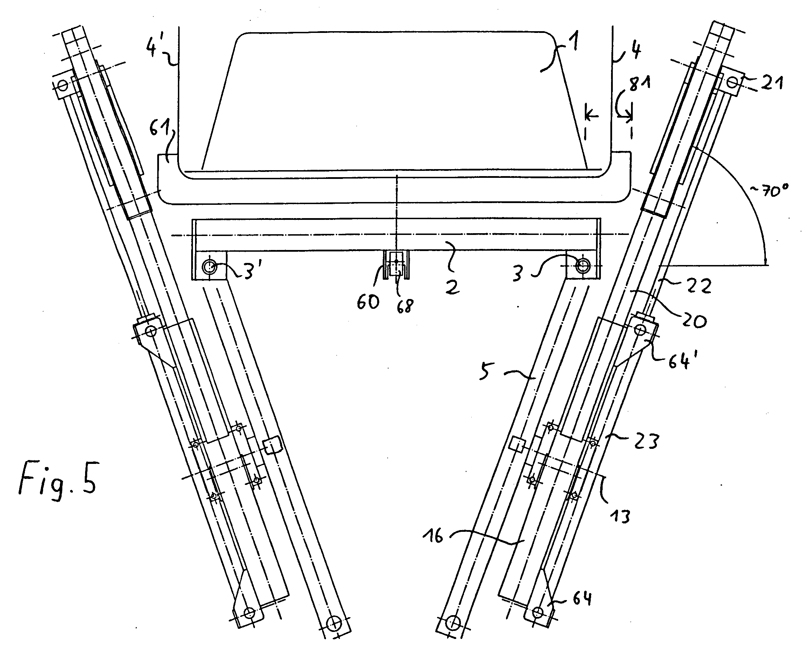

Eine Ausgestaltung der Erfindung ist in den Fig. 5 bis 8 dargestellt.

Die Fig. 5 zeigt eine Draufsicht auf einen Kraftwagen 1 mit einem beidseitig einsetzbaren Trägergerät, welches zur Verdeutlichung in doppelter Ausführung für beide Seiten des Kraftwagens 1 bei der Vorbeifahrt an einem Hindernis dargestellt ist. Alle Merkmale, die in den Ausführungsbeispielen identisch auftreten, sind in allen Figuren mit den gleichen Bezugszeichen bezeichnet.

Das Trägergerät, welches hier als Beispiel als ein Vorbauträger ausgestaltet ist, verfügt wiederum über einen Grundrahmen 2, der an dem Kraftwagen 1 starr und verwindungssteif befestigt ist. Der Grundrahmen 2 trägt hier zwei im wesentlichen vertikal angeordnete erste Drehachsen 3 und 3'. Diese Drehachsen 3 bzw. 3' sind jeweils in dem kleinen bereits genannten Abstand 81 von der einen Seite 4 bzw. von der anderen Seite 4' des Kraftwagens 1 angeordnet.

Die Fig. 5 zeigt zwei Trägergeräte, die jeweils links und rechts an den ersten Drehachsen 3 bzw. 3' befestigt sind. Dies entspricht natürlich nicht der Betriebssituation, sondern stellt die einfache Konvertibilität des einzeln vorhandenen Trägeraufbaus heraus.

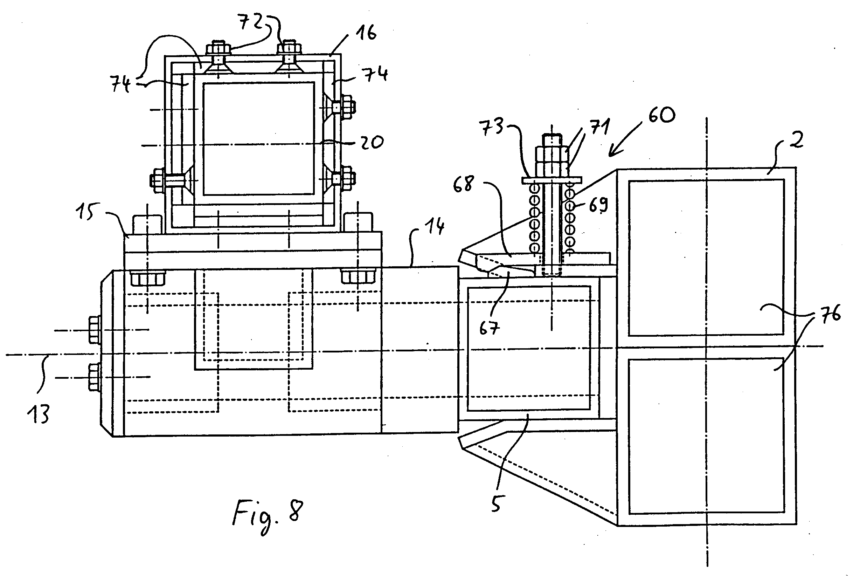

Zwischen den beiden Drehachsen 3 und 3' ist die bewegliche Sicherheitsscherstange 5 angeordnet. Diese im wesentlichen horizontal angeordnete Scherstange 5 ist jeweils an einer der beiden Drehachsen 3 bzw. 3' einseitig angelenkt und erstreckt sich in Ruhestellung im wesentlichen parallel zum Grundrahmen 2 über fast die gesamte Fahrzeug- oder Anhängerbreite. Es ist dabei ein Achsbolzen für die Achse 3 bzw. 3' vorgesehen, wobei an dem jeweils anderen Stangenende als Sicherungselement ein Abscherstift an der Achse 3' bzw. 3 einsetzbar ist. Vorteilhafterweise wird aber jeweils mittig der Scherstange 5 eine Absicherung über einen verschleißfreien federbelasteten Sperrbolzen 60 vorgesehen, der im Zusammenhang mit der Fig. 8 näher beschrieben wird.

Aus der Fig. 5 geht nun weiter hervor, daß bei dem Anfahren eines Hindernisses, wie zum Beispiel eines Baumes, die Sicherung des Trägergerätes durch die symmetrisch zu dem Sperrbolzen 60 angeordnete Scherstange 5 sowohl bei einem linksseitigen als auch bei einem rechtsseitigen Einsatz des Trägergerätes in gleicher Weise ausgelöst und so das am Trägergerät angebrachte Werkzeug in zuverlässiger Weise vor einer Beschädigung geschützt wird. Dabei zeigt die Zeichnung, daß auch beim zweiten Ausführungsbeispiel ein Abscherwinkel von über 70 Grad auf beiden Seiten erreichbar ist.

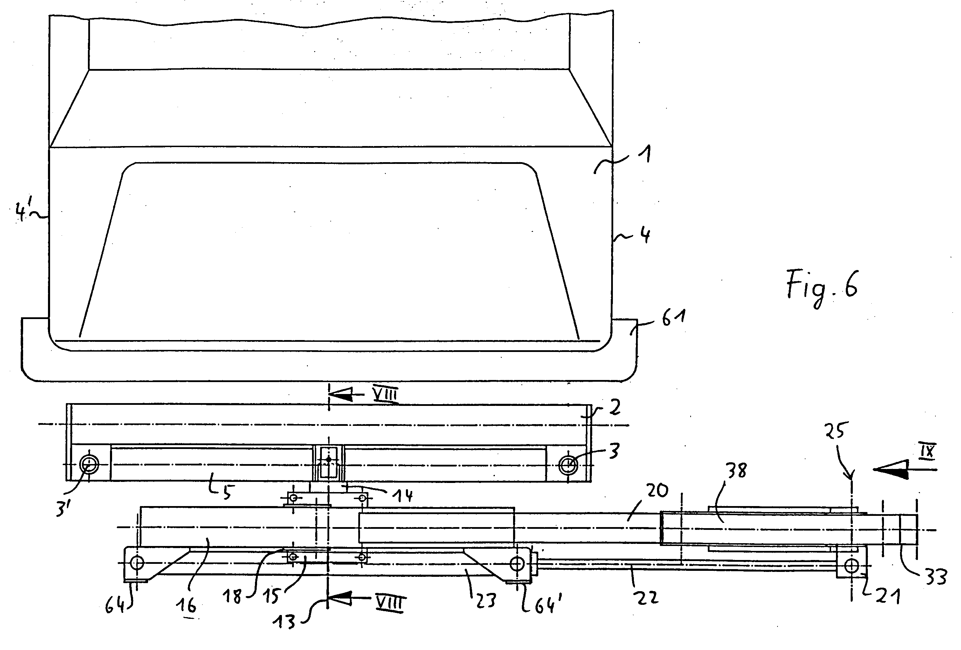

Das Trägergerät wird nun unter Bezugnahme auf die Fig. 6 näher beschrieben. Die Fig. 6 zeigt eine Draufsicht auf das in Fahrtrichtung links angeordnete Trägergerät gemäß Fig. 5, wobei das Innenrohr 20 der Teleskopeinrichtung zum Einsatz eines Mähwerkzeuges oder dergleichen ausgefahren ist.

Auf der Scherstange 5 ist mittig die horizontal ausgerichtete zweite Achse 13 angeordnet, die in einer zylindrischen Hülse 14 vor der Scherstange 5 befestigt und in der Ruhestellung im wesentlichen in Fahrtrichtung ausgerichtet ist. An der Hülse 14 ist der Außenrahmen 16 an einer aufgeschweißten Platte 15 über vier Schrauben befestigt.

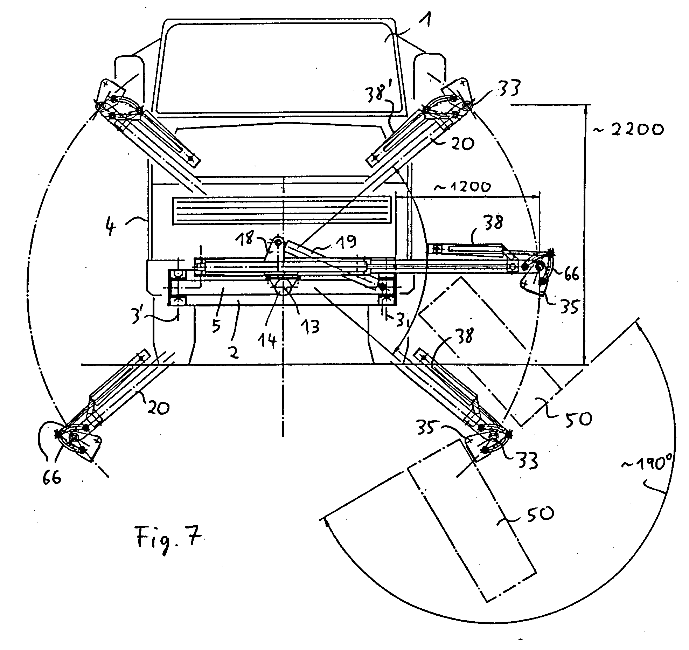

Der Außenrahmen 16 besteht aus einem ungefähr zwei Drittel der Fahrzeugbreite einnehmenden, quaderförmigen Hohlrohr, auf welchem ein Ansatz 18 befestigt ist. An dem Ansatz 18 ist der hydraulische Stellzylinder 19, der in der Fig. 7 dargestellt ist, zwischen dem Rahmen 2 und dem Außenrahmen 16 angeordnet.

In dem Außenrahmen 16 ist ein Innenrohr 20 angeordnet, welches eine Länge von knapp der gesamten Fahrzeugbreite aufweist. An dem einen Ende des Innenrohrs 20 ist seitlich ein Halterungsansatz 21 befestigbar, an dem ein Plunger oder eine Kolbenstange 22 angelenkt ist. Der die Kolbenstange 22 betätigende Schiebezylinder 23 ist durch eine an und vor dem Rahmen 16 befestigte Aufnahme 64' hindurch geschoben und in einer weiteren Aufnahme 64 befestigt. Der Abstand der Aufnahmen 64 und 64' voneinander ist durch die Länge der in den Schiebezylinder 23 einschiebbaren Kolbenstange 22 vorgegeben.

An dem Ende 25 des Innenrohres 20 ist die horizontal ausgerichtete dritte Achse 33 vorgesehen. An dieser horizontalen dritten Achse 33 ist die Umlenkhalterung 35 angelenkt, die im Detail in der Fig. 7 dargestellt ist.

Die Fig. 7 zeigt eine Vorderansicht des Trägergerätes gemäß Fig. 5 mit einem jeweils nach oben bzw. nach unten verschwenkten rechts bzw. links angeordneten Vorbauträger.

Die Umlenkhalterung 35 verfügt hier vorteilhafterweise über eine totpunktfreie drehende Lagerung. Die Platten der Umlenkhalterung 35 sind symmetrisch zu dem Innenrohr 20 auf jeder Seite desselben um die Achse 33 drehbar angeordnet. Dabei ist die Umlenkhalterung 35 mit Hilfe einer Vier-Stege-Mechanik um diese Achse 33 drehbar, wobei jeweils zwei Stege 66 symmetrisch auf den besagten Platten und auf dem Innenrohr 20 angelenkt sind, wobei die gewünschte Drehung über den Stellzylinder 38 vermittelt wird.

Der Stellzylinder 38 ist, wie aus der Fig. 7 zu erkennen, in einem kleinen Winkel von wenigen Grad leicht nach unten in Richtung der Fahrzeugaußenseite geneigt, so daß bei einem ausgefahrenen Stellzylinder 38 eine größere Neigung des Arbeitswerkzeugs 50 erreichbar ist. Eine größere Neigung als 5 bis 10 Grad würde wiederum zu einer ungünstigeren Kinematik führen. In der mit dem Bezugszeichen 38' versehenen Position ist der Stellzylinder 38' vollständig eingefahren, so daß das Arbeitswerkzeug gemäß der Anordnung der Platte der Umlenkhalterung 35 vor dem Fahrzeug 1 und damit in einer Ruhestellung lagert. Damit ist das Werkstück insgesamt in einem Winkelbereich von ungefähr 190 Grad einstellbar.

Die Fig. 7 zeigt insbesondere die Wirkungsweise der horizontalen zweiten Drehachse 13, an der der Außenrahmen 16 befestigt ist. Diese ist in einer die Umlenkhalterung 35 anhebenden oder absenkenden Weise betätigt, so daß der Außenrahmen 16 mit dem Innenrohr 20 und den daran befestigten Teilen in einem Winkel von ungefähr 40 Grad zur Horizontalen stehen kann. Dabei ist eine Arbeitshöhe von 2200 Millimetern bei einer Seitenauslage von 1200 Millimeter erreichbar.

Der Ansatz 18 ist im wesentlichen in der Mitte angebracht, wobei der Anlenkpunkt des Stellzylinders 19 vorzugsweise etwas außerhalb der Fahrzeugmitte, hier rechts in Fahrtrichtung, angeordnet ist, wie es aus der Fig. 7 hervorgeht. Das andere Ende des Stellzylinders 19 ist dann an der Scherstange 5 in der Nähe der ersten Achse 3 in Fahrtrichtung angelenkt, wobei als erste Achse hier die erste Achse 3 bzw. 3' vorzusehen ist, die sich auf der dem genannten Anlenkpunkt gegenüberliegenden Seite 4 befindet. So wird gewährleistet, daß die Winkellage der zweiten Achse 13 von jeweils ungefähr 40 Grad zur Horizontalen sowohl bei einer linken als auch bei einer rechten Anordnung gleichermaßen erreichbar ist.

Die Fig. 8 zeigt eine Schnittansicht entlang der Linie VIII-VIII in Fig. 6 und damit insbesondere den mittigen Sperrbolzen 60. An der Scherstange 5 ist mittig eine Verriegelungsplatte 67 vorgesehen, die in eine Sperrplatte 68 eingreift, die mit Hilfe einer sich gegen eine Anschlagplatte 73 abstützenden Druckfeder 69 nach unten in den besagten Eingriff gedrückt wird. Somit verbleibt beim normalen Betrieb des Werkzeuges 50 die Scherstange 5 in paralleler Stellung zu dem Rahmen 2. Fährt nun das Werkzeug 50 gegen ein Hindernis, schiebt die Scherstange 5 die Verriegelungsplatte 67 und damit die Sperrplatte 68 über die abgeschrägten Flächen gegen die Kraft der Feder 69 nach oben, so daß nach Überschreiten der mit Hilfe der Muttern 71 voreinstellbaren Auslösekraft die Scherstange 5 wie beim ersten Ausführungsbeispiel frei ausschwingen kann. Der Vorteil dieser Einrichtung liegt darin, daß die ausgelöste Sicherungsvorrichtung nach einfachem Zurücksetzen des Kraftwagens 1 wieder eingeklinkt werden kann, ohne das ein Scherstift zu ersetzen ist.

Aus der Fig. 8 geht weiter hervor, daß das Innenrohr 20 in dem Außenrahmen 16 mit Hilfe von Kunststoffgleitschienen 74 geführt wird, die mittels Schrauben 72 gehalten und eingestellt werden. Durch die Verwendung der Kunststoffgleitschienen 74 ist ein fettfreies Arbeiten möglich. Schließlich ist zu erkennen, daß der Grundrahmen 2 hohl ausgeführt ist, so daß er als Tank in seinen Hohlräumen 76 die Hydraulikflüssigkeit der Vorrichtung aufnehmen kann.

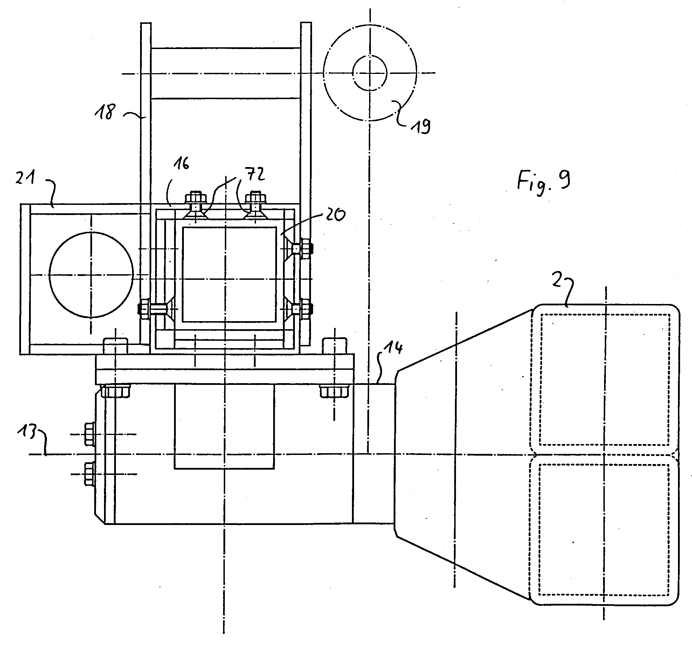

Die Fig. 9 schließlich zeigt eine Seitenansicht aus der Richtung IX in Fig. 6. Damit sind eine Vielzahl der Elemente aus der Fig. 8 zu erkennen. Es ist weiter der Ansatz 18 zu erkennen, an dem der Stellzylinder 19 zur Drehung der Vorrichtung um die Achse 13 befestigt ist. Auch ist der Halterungsansatz 21 zu erkennen, an dem die Kolbenstange 22 befestigt ist.

Der Vorteil dieses Trägergerätes nach dem zweiten Ausführungsbeispiel liegt darin, daß es, wie es schon aus der Figurenbeschreibung ersichtlich ist, beidseitig eingesetzt werden kann. Damit ist es möglich, dieses Gerät auch am Heck eines Fahrzeugs oder an einer beliebigen Seite eines landwirtschaftlichen Schlepperfahrzeugs anzubringen.

Im Folgenden wird eine mögliche Abfolge von Handgriffen zum Umbau der Vorrichtung erläutert. Es wird dabei von der Vorrichtung in der Position der Fig. 6 ausgegangen. Zuerst wird ein weiterer Bolzen in die Achse 3' eingesetzt, so daß die Scherstange 5 nun beidseitig an dem Rahmen 2 fixiert ist. Die Hydraulikzuleitungen des Werkzeuges 50 werden abgetrennt und das Werkzeug 50 abgenommen. Der Teleskopzylinder 22, 23 wird in der Aufnahme 64 und an dem Halterungsansatz 21 gelöst, entnommen und nach einer Drehung in einer horizontalen Ebene um 180° wieder in die Aufnahmen 64, 64' eingesetzt und jetzt auf der anderen Seite, d.h. an der Aufnahme 64' durch einen steckbaren Bolzen befestigt. Dabei kann die hydraulische Verbindung ungelöst bleiben. Die Kolbenstange 22 ist nun zu der anderen Fahrzeugseite 4' hin ausgerichtet.

Das innere Teleskoprohr 20 wird aus dem Außenrahmen 16 herausgezogen und ebenfalls einer Drehung in einer horizontalen Ebene um 180° unterworfen, so daß das innere Teleskoprohr 20 nun von der anderen Fahrzeugseite 4' in den Außenrahmen 16 einschiebbar ist. Dabei ist sofort zu erkennen, daß der mittig oberhalb des Teleskoprohrs 20 angeordnete Betätigungszylinder 38 eine symmetrische Stellung aufweist und über die Stege 66 die beidseitig des Innenrohrs 20 angeordnete Umlenkhalterung 35 symmetrisch ansteuern kann. Die Umlenkhalterung 35 und deren Antrieb 38 ist nämlich auf dem ausfahrbaren Abschnitt der Teleskopauszugseinrichtung 20 im wesentlichen symmetrisch bezüglich der Längsachse der durch die Teleskopauszugseinrichtung 20 und der Sicherheitsscherstange 5 vorgegebenen Ebene angeordnet sind.

Nun wird das Innenrohr 20 an dem auf der anderen Seite angeordneten Halterungsansatz 21 befestigt, so daß mit Hilfe des Schiebezylinders 23 das Teleskoprohr 20 nun auf der anderen Fahrzeugseite 4' aus dem Außenrahmen 16 ausfahrbar ist.

Schließlich wird die Scherstange durch Entnahme des Bolzens an der Achse 3 freigegeben, so daß nun die Anfahrsicherung auf der anderen Fahrzeugseite 4' aktiviert ist. Durch die mittige Anordnung der Auslegersicherung ist das erforderliche Auslösemoment auf beiden Seiten gleich groß. Da die erste horizontale Achse 13 mittig des Fahrzeugs 1 angeordnet ist, kann der Außenrahmen 16 und mit ihm das an der Umlenkplatte 35 befestigte Werkzeug 50 nun in gleicher Weise, wie es in der Fig. 7 dargestellt ist, angehoben und abgesenkt werden, wobei dies über die beschriebene asymmetrische Anordnung des Stellzylinders 19 erreicht wird.

## Patentansprüche

1. Trägergerät, insbesondere für einen Kraftwagen (1), zum Tragen eines Arbeitswerkzeuges (50), insbesondere eines Mähwerks oder eines Schneidwerks, mit einem Grundrahmen (2), an dem eine im wesentlichen parallel zur Ebene des Grundrahmens verschiebliche Auslegereinrichtung (16, 18 - 25) befestigt ist, an der eine das Arbeitswerkzeug (50) tragende Umlenkhalterung (33 - 36) zur Einstellung der Arbeitswerkzeugsneigung befestigt ist, wobei an dem Grundrahmen (2) an einem seiner Enden eine im wesentlichen vertikale erste Achse (3) angeordnet ist, an der eine im wesentlichen horizontale und im wesentlichen zum anderen Ende hin ausgerichtete Sicherheitsscherstange (5) befestigt ist, wobei die Auslegereinrichtung (16, 18 - 25) als Teleskopauszugseinrichtung (16, 20; 22, 23) ausgebildet ist, an deren äußerem Ende (25) die Umlenkhalterung (35) an einer dritten Achse (33) angelenkt ist, wobei die Auslegereinrichtung (16, 18 - 25) mit ihrem Außenrahmen (16) auf der Sicherheitsscherstange (5) um eine im wesentlichen horizontale zweite Achse (13) verschwenkbar angeordnet ist, die in Ruhestellung der Sicherheitsscherstange (5) im wesentlichen quer zur Ebene des Grundrahmens ausgerichtet ist und mit der die Auslegereinrichtung (16, 18 - 25) mit der an ihr befestigten Umlenkhalterung (33 - 36) in ihrer Neigung aus der Horizontalen anhebbar ist und wobei die zweite Achse (13) im wesentlichen parallel zur dritten Achse (33) ausgerichtet ist, **dadurch gekennzeichnet**, daß die Auslegereinrichtung mit ihrem Außenrahmen um die zweite Achse in ihrer Neigung auch absenkbar ist, daß die zweite Achse (13) im wesentlichen in der Mitte des Grundrahmens (2) angeordnet ist, daß an dem Grundrahmen (2) an dem anderen Ende des Trägergerätes eine im wesentlichen vertikale weitere erste Achse (3') angeordnet ist, an der die Sicherheitsscherstange (5) anlenkbar ist, daß der ausfahrbare Abschnitt und der Antrieb der Teleskopauszugseinrichtung (20; 22, 23) aus dem mit der zweiten Achse (13) verbundenen Außenrahmen (16) herausziehbar und an dem anderen Ende des Außenrahmens (16) einsteckbar ist und daß die Umlenkhalterung (35) und deren Antrieb (38) auf dem ausfahrbaren Abschnitt der Teleskopauszugseinrichtung (20) im wesentlichen symmetrisch bezüglich der Längsachse der Teleskopauszugseinrichtung (20) angeordnet sind.

2. Trägergerät nach Anspruch 1, dadurch gekennzeichnet, daß der Außenrahmen (16) oberhalb der zweiten Achse (13) angeordnet ist.

3. Trägergerät nach einem der Ansprüche 1 bis 2, dadurch gekennzeichnet, daß das eine Ende eines Stellglieds (19) zur Verkippung des Außenrahmens (16) und des Innenrohrs (20) im wesentlichen im mittigen Bereich des Grundrahmens (2) an dem Außenrahmen (16) angeordnet ist und daß das andere Ende des Stellglieds (19) an dem gegenüberliegenden Ende des Grundrahmens rechts bzw. links in Nähe zu der Achse (3 bzw. 3') an der Scherstange (5) befestigt ist.

4. Trägergerät nach einem der Ansprüche 1 bis 3, dadurch gekennzeichnet, daß ein als Antrieb zur Verkippung der Umlenkhalterung (35) ausgebildeter Betätigungszylinder (38) in Richtung der Umlenkhalterung leicht nach unten geneigt ist.

5. Trägergerät nach Anspruch 2 im montierten Zustand auf einem Trägerfahrzeug, dadurch gekennzeichnet, daß die zweite Achse (13) in einer Höhe zwischen 45 und 80 cm über dem Boden (53) angeordnet ist.

## Claims

1. A carrier apparatus, in particular for a motor vehicle (1), for carrying a working implement (50), in particular a mowing mechanism or a cutting mechanism, having a main frame (2) to which there is fixed a boom arrangement (16, 18-25) which is displaceable substantially parallel to the plane of the main frame and to which is fixed a guide holder (33-36) carrying the working implement (50), for adjusting the inclination of the working implement, wherein arranged on the main frame (2) at one of its ends is a substantially vertical first axis member (3) to which there is fixed a safety bar (5) which is substantially horizontal and which is oriented substantially towards the other end, wherein the boom arrangement (16, 18-25) is in the form of a telescopic extension arrangement (16, 20; 22, 23), to the outer end (25) of which the guide holder (35) is pivoted at a third axis member (33), wherein the boom arrangement (16, 18-25) is arranged with its outer frame (16) on the safety bar (5) pivotably about a substantially horizontal second axis member (13) which in the rest position of the safety bar (5) is oriented substantially transversely to the plane of the main frame and with which the boom arrangement (16, 18-25) with the guide holder (33-36) fixed thereto can be lifted in its inclination out of the horizontal and wherein the second axis member (13) is oriented substantially parallel to the third axis member (33), characterised in that the boom arrangement with its outer frame can also be lowered in its inclination about the second axis member, that the second axis member (13) is arranged substantially at the centre of the main frame (2), that arranged on the main frame (2) at the other end of the carrier apparatus is a substantially vertical further first axis member (3') at which the safety bar (5) can be pivoted, that the extensible portion and the drive of the telescopic extension arrangement (20; 22, 23) can be pulled out of the outer frame (16) connected to the second axis member (13) and can be inserted at the other end of the outer frame (16), and that the guide holder (35) and its drive (38) are arranged on the extensible portion of the telescopic extension arrangement (20) substantially symmetrically with respect to the longitudinal axis of the telescopic extension arrangement (20).

2. A carrier apparatus according to claim 1 characterised in that the outer frame (16) is arranged above the second axis member (13).

3. A carrier apparatus according to one of claims 1 and 2 characterised in that one end of a control member (19) for tilting the outer frame (16) and the inner tube (20) is arranged substantially in the central region of the main frame (2) on the outer frame (16) and that the other end of the control member (19) is fixed to the shearing bar (5) at the oppositely disposed end of the main frame to the right or to the left respectively in the vicinity of the axis member (3 or 3').

4. A carrier apparatus according to one of claims 1 to 3 characterised in that an actuating cylinder (38) which is in the form of a drive for tilting the guide holder (35) is inclined slightly downwardly in the direction of the guide holder.

5. A carrier apparatus according to claim 2, in the condition of being mounted on a carrier vehicle, characterised in that the second axis member (13) is arranged at a height of between 45 and 80 cm above the ground (53).

## Revendications

1. Dispositif porteur, en particulier pour équiper un véhicule automobile (1), destiné à porter un outil de travail (50), en particulier un mécanisme de fauche ou un mécanisme de coupe, comportant un châssis de base (2) sur lequel est fixée une flèche (16, 18 - 25) mobile dans un plan sensiblement parallèle à celui du châssis de base, sur laquelle est fixé un support d'orientation (33 - 36) supportant l'outil (50) et destiné à régler l'inclinaison de cet outil, tandis que sur le châssis de base (2) est disposé, sur l'une de ses extrémités, un premier axe (3) sensiblement vertical sur lequel est fixée, à son tour, une barre de sécurité (5) orientée sensiblement vers l'autre extrémité, la flèche (16, 18 -25) étant réalisée sous la forme d'un dispositif à extraction téléscopique (16, 20 ; 22, 23) sur l'extrémité extérieur (25) duquel est articulé le support d'orientation 35 sur un troisième axe (33), caractérisé en ce que la flèche (16, 18 - 25) avec son cadre extérieur (16) est disposée sur la barre de sécurité (5) de manière à pivoter autour d'un deuxième axe (13) sensiblement horizontal, lequel, en position de repos de la barre (5), est orienté en direction sensiblement transversale au plan du châssis de base, axe avec lequel la flèche (16, 18 - 25) peut être soulevée, avec son support d'orientation (33 - 36) en modifiant son inclinaison par rapport à l'horizontale, tandis que le deuxième axe (13) est orienté sensiblement parallèlement au troisième axe (33), et caractérisé en ce que la flèche avec son cadre extérieur peut être également abaissée pour ce qui concerne son inclinaison autour du deuxième axe, en ce que le deuxième axe (13) est disposé sensiblement au milieu du châssis de base (2), en ce que sur ce châssis de base (2) est disposé à l'autre extrémité du dispositif porteur un autre premier axe (3') sensiblement vertical sur lequel la barre de sécurité (5) peut être articulée, en ce que la section extensible et le moteur du dispositif d'extraction téléscopique (20 ; 22, 23) peuvent être extraits du cadre extérieur (16) relié au deuxième axe (13) et emmanchés sur l'autre extrémité du cadre extérieur (16), et en ce que le support d'orientation (35) et son moteur (38) sont disposés sur la section extensible du dispositif d'extraction téléscopique (20) de manière sensiblement symétrique par rapport à l'axe longitudinal dudit dispositif d'extraction téléscopique (20).

2. Dispositif porteur selon la revendication 1, caractérisé en ce que le cadre extérieur (16) est disposé au-dessus du deuxième axe (13).

3. Dispositif porteur selon l'une des revendications 1 à 2, caractérisé en ce que l'une des extrémités d'un organe de réglage (19) prévu pour le basculement du cadre extérieur (16) et du tube intérieur (20) est disposé sensiblement dans la zone centrale du châssis de base (2) sur le cadre extérieur (16), et en ce que l'autre extrémité de cet organe de réglage (19) est fixée à l'extrémité opposée du cadre de base à droite ou à gauche à proximité de l'axe (3 ou 3') sur la barre (5).

4. Dispositif porteur selon l'une des revendications 1 à 3, caractérisé en ce qu'un vérin (38) réalisé sous forme d'un entraînement destiné à faire basculer le support d'orientation (35) , est incliné légèrement vers le bas en direction dudit support d'orientation.

5. Dispositif porteur selon la revendication 2, à l'état monté sur un véhicule porteur, caractérisé en ce que le deuxième axe (13) est disposé à une hauteur comprise entre 45 et 80 cm au-dessus du sol (53).
